# EUROPÄISCHE PATENTSCHRIFT

(11) **EP 4 025 482 B1**
(45) Veröffentlichungstag und Bekanntmachung des Hinweises auf die Patenterteilung: **01.01.2025**
(21) Anmeldenummer: 20767514.1
(22) Anmeldetag: 02.09.2020
(51) Int. Cl.: B62M 6/90, B62K 19/30, B62J 43/28, B62J 43/13, H01M 50/249, B62M 6/55

(54) **HALTEVORRICHTUNG ZUR LÖSBAREN HALTERUNG EINES AKKUMULATORS AN EINEM FAHRRADRAHMEN**
HOLDER DEVICE FOR AN BATTERY ON A BICYCLE FRAME
DISPOSITIF DE FIXATION POUR LE MONTAGE AMOVIBLE D'UN ACCUMULATEUR SUR UN CADRE DE BICYCLETTE

(30) Priorität: 04.09.2019 DE 102019213435
(43) Veröffentlichungstag der Anmeldung: 13.07.2022
(73) Patentinhaber: Robert Bosch GmbH, 70442 Stuttgart (DE)
(72) Erfinder: PHILIPZIK, Fabian, 72076 Tuebingen (DE); KUNERT, Peter, 72805 Lichtenstein (DE)
(86) Internationale Anmeldenummer: PCT/EP2020/074415
(87) Internationale Veröffentlichungsnummer: WO 2021/043795

(56) Entgegenhaltungen:
- EP-A1- 1 911 666
- DE-A1- 102017 007 570
- DE-A1- 102018 125 757
- DE-A1- 102019 104 238
- DE-U1- 202015 103 750
- US-A1- 2008 111 344
- US-A1- 2012 322 321
- US-A1- 2015 114 734
- US-A1- 2016 056 432
- US-B2- 10 183 591
- US-B2- 9 399 499

## Beschreibung

### Stand der Technik

Aus DE 10 2016 213 903 B3 und aus DE 20 2016 104 156 U1 ist bereits jeweils eine Haltevorrichtung zur lösbaren Halterung eines Akkumulators, insbesondere eines Fahrradakkumulators, an einem Rahmen, insbesondere an einem Fahrradrahmen, mit zumindest einer Trägereinheit zu einer zumindest teilweisen Aufnahme und/oder Führung des Akkumulators, vorgeschlagen worden.

Das Dokument US 9 399 499 B2 offenbart die Merkmale der Präambel von Anspruch 1.

### Offenbarung der Erfindung

Die Erfindung geht aus von einer Haltevorrichtung zur lösbaren Halterung eines Akkumulators, insbesondere eines Fahrradakkumulators, an einem Fahrradrahmen, mit zumindest einer zumindest teilweisen Aufnahme und/oder Führung des Akkumulators.

Es wird vorgeschlagen, dass die Haltevorrichtung eine, insbesondere zumindest größtenteils innerhalb des Rahmens, an der Trägereinheit angeordnete Verriegelungseinheit zur einseitigen lösbaren, insbesondere axialen, Fixierung des Akkumulators an der Trägereinheit aufweist. Durch die erfindungsgemäße Ausgestaltung der Haltevorrichtung kann vorteilhaft eine einfache und/oder sichere Montage, Demontage und/oder Halterung eines Akkumulators, insbesondere eines Fahrradakkumulators, in und/oder an einem Fahrrad ermöglicht werden. Vorteilhaft kann durch die einseitige lösbare, insbesondere axiale, Fixierung eine hohe Benutzerfreundlichkeit erreicht werden. Vorteilhaft können Akkumulatoren unterschiedlicher Länge durch die Haltevorrichtung gehalten werden.

Vorzugsweise ist die Haltevorrichtung als eine Fahrradakkumulatorhaltevorrichtung ausgebildet. Insbesondere ist die Haltevorrichtung dazu vorgesehen, eine zumindest temporäre Positionierung eines Akkumulators in und/oder an einem Fahrrad zu ermöglichen. Vorzugsweise ist der Akkumulator als ein Fahrradakkumulator ausgebildet. Insbesondere ist der Akkumulator dazu vorgesehen, Energie für eine Antriebseinheit eines Fahrrads, beispielsweise einen Hilfsmotor eines E-Bikes oder eines Pedelecs, bereitzustellen. Insbesondere ist der Akkumulator einfach, vorzugsweise werkzeuglos, in die Haltevorrichtung montierbar oder aus der Haltevorrichtung entnehmbar. Insbesondere ist die Haltevorrichtung dazu vorgesehen, an einem Fahrradrahmen, vorzugsweise in einem Fahrradrahmen, beispielsweise in einem Oberrohr, einem Sattelrohr, einem Steuerrohr oder bevorzugt einem Unterrohr des Fahrradrahmens, fixiert zu werden. Für die Fixierung in oder an einem Fahrradrahmen umfasst die Haltevorrichtung insbesondere Befestigungselemente, beispielsweise Schraub-, Steck- oder Rastelemente. Alternativ oder zusätzlich ist denkbar, dass die Haltevorrichtung, vorzugsweise die Trägereinheit oder das Trägerelement, zumindest teilweise einstückig mit dem Fahrradrahmen ausgebildet ist oder zumindest ein Teil der Haltevorrichtung, vorzugsweise die Trägereinheit oder das Trägerelement, einstückig mit dem Fahrradrahmen verbunden, beispielsweise verschweißt oder verklebt ist. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Verriegelungseinheit weist ein erstes Verriegelungselement und ein mit dem ersten Verriegelungselement korrespondierendes zweites Verriegelungselement auf. Es ist denkbar, dass das erste Verriegelungselement und das zweite Verriegelungselement an einem Grundkörper der Verriegelungseinheit beweglich, insbesondere drehbeweglich, gelagert Das erste Verriegelungselement blockiert in einem Verriegelungszustand eine Bewegung, insbesondere eine Drehbewegung, des zweiten Verriegelungselements. Vorzugsweise weist die Haltevorrichtung eine Betätigungseinheit auf, welche zu einer werkzeuglosen Betätigung der Verriegelungseinheit durch einen Benutzer vorgesehen ist. Insbesondere kann die Betätigungseinheit als ein mechanischer oder elektrischer Schalter ausgebildet sein. Besonders bevorzugt weist die Betätigungseinheit zumindest einen Sicherungsmechanismus zu einem Schutz vor einer unautorisierten Betätigung der Verriegelungseinheit auf. Die Trägereinheit dient insbesondere zu einer Stabilisierung der Haltevorrichtung. Unter einer "Fixierung" soll insbesondere eine positionsfeste und/oder rotationsfeste Verbindung verstanden werden. Vorzugsweise ist die Verriegelungseinheit dazu vorgesehen, in einem an der Trägereinheit angeordneten Zustand des Akkumulators lediglich an einer Seite des Akkumulators auf den Akkumulator einzuwirken. Bevorzugt weist die Verriegelungseinheit eine Fixierseite auf, an der alle Elemente der Verriegelungseinheit angeordnet sind, um den Akkumulator einseitig zu fixieren. Bevorzugt wird der Akkumulator mittels der Verriegelungseinheit an keiner weiteren Seite fixiert. Insbesondere wird der Akkumulator mittels der Verriegelungseinheit an einer Seite axial fixiert, elektrisch kontaktiert, verriegelt und entriegelt. Insbesondere wird der Akkumulator mittels der Verriegelungseinheit an keiner weiteren Seite axial fixiert, elektrisch kontaktiert, verriegelt und entriegelt.

Ferner wird vorgeschlagen, dass die Verriegelungseinheit an zumindest einem Ende zumindest einer Trägereinheit angeordnet ist, wobei ein weiteres Ende des Trägerelements, das der Verriegelungseinheit abgewandt ist, frei von einem, insbesondere beweglich gelagerten, Verriegelungselement, einem, insbesondere beweglich gelagerten, Axialsicherungselement und/oder einem Anschlagelement ausgebildet ist. Dadurch kann vorteilhaft ein besonders einfacher Aufbau der Haltevorrichtung realisiert werden. Vorteilhaft können Akkumulatoren unterschiedlicher Länge montiert werden. Vorteilhaft kann eine besonders einfache Montage, eine besonders einfache Demontage oder ein besonders einfacher Wechsel des Akkumulators ermöglicht werden. Vorteilhaft kann durch die erfindungsgemäße Ausgestaltung eine besonders hohe Benutzerfreundlichkeit erreicht werden. Insbesondere ermöglicht die erfindungsgemäße Haltevorrichtung eine freie Bewegung der Verriegelungseinheit, insbesondere in einem nicht an der Trägereinheit fixierten Zustand, entlang einer Längsachse des Trägerelements, da das Trägerelement entlang der Längsachse begrenzungsfrei ausgestaltet ist. Vorzugsweise kann die Verriegelungseinheit vollständig von der Trägereinheit getrennt werden. Vorzugsweise bildet zumindest das Trägerelement der Trägereinheit eine Führungsschiene aus, welche insbesondere dazu vorgesehen ist, den Akkumulator bei einer Montage, insbesondere bei einem Einschieben, und/oder bei einer Demontage, insbesondere bei einem Herausziehen, zu führen und dabei insbesondere eine Bewegungsachse vorzugeben. Insbesondere kann die Führungsschiene zumindest dazu vorgesehen sein, eine Orientierung des Akkumulators bei einem Einsetzen des Akkumulators in die Haltevorrichtung vorzugeben. Dadurch kann vorteilhaft eine Fehlmontage und/oder eine Beschädigung des Akkumulators und/oder der Haltevorrichtung vermieden werden. Es ist denkbar, dass der Akkumulator und die Führungsschiene eine nach dem Poka-Yoke-Prinzip funktionierende Passung zueinander aufweisen. Insbesondere kann die Trägereinheit aus einem oder mehreren Trägerelementen ausgebildet sein. Insbesondere ist das Trägerelement als ein Blechbiegeteil, insbesondere aus einem Aluminiumblech oder aus einem Stahlblech ausgebildet. Alternativ kann das Trägerelement auch aus einem Kunststoff oder aus einem Spezialwerkstoff, wie beispielsweise Carbon, ausgebildet sein. Insbesondere ist das Trägerelement aus einem einzelnen Bauteil ausgebildet. Vorzugsweise weist das Trägerelement und/oder der Akkumulator zumindest ein Gleitelement auf. Dadurch kann vorteilhaft eine Beschädigung, beispielsweise ein Verkratzen des Akkumulators und/oder des Trägerelements vermieden werden. Vorteilhaft ist zumindest ein längliches Element, beispielsweise ein Kabel, ein Schlauch und/oder ein Bowdenzug, entlang der Längsachse des Trägerelements an dem Trägerelement vorbeigeführt. Besonders vorteilhaft weist die Haltevorrichtung, insbesondere das Trägerelement, zumindest eine Halterung für das längliche Element auf. Hierdurch kann insbesondere eine Kompaktheit gesteigert werden. Unter einem "Axialsicherungselement" soll insbesondere ein Bauteil oder ein Element verstanden werden, welches die Bewegung des Akkumulators relativ zu der Trägereinheit entlang einer Längsachse des Trägerelements einschränkt oder den Akkumulator gegen eine Bewegung relativ zu der Trägereinheit entlang einer Längsachse des Trägerelements sichert, fixiert oder verriegelt. Vorzugsweise umfasst die Verriegelungseinheit oder die Trägereinheit zumindest an dem Ende des Trägerelements, an dem die Verriegelungseinheit angeordnet ist, zumindest ein Anschlagelement. Vorzugsweise ist das Anschlagelement kraft-, form- und/oder stoffschlüssig mit der Trägereinheit, insbesondere mit dem Trägerelement der Trägereinheit, verbunden. Insbesondere begrenzt das Anschlagelement eine Bewegung des Akkumulators relativ zu der Trägereinheit zumindest in einer Montage- oder Einschubrichtung des Akkumulators. Bevorzugt wird der Akkumulator an keiner weiteren Seite axial fixiert oder axial begrenzt. Zudem wird vorgeschlagen, dass die Haltevorrichtung zumindest eine Sicherungseinheit aufweist, die zumindest ein Sicherungselement, das an einem der Verriegelungseinheit abgewandten, insbesondere weiteren, Ende eines Trägerelements der Trägereinheit angeordnet ist und den Akkumulator in einem an dem Trägerelement angeordneten Zustand des Akkumulators zumindest entlang einer quer zu einer Längsachse des Trägerelements verlaufenden Richtung am Trägerelement sichert. Dadurch kann vorteilhaft eine sichere Halterung des Ackumulators durch die Haltevorrichtung realisiert werden, insbesondere ohne die Benutzerfreundlichkeit maßgeblich zu beeinträchtigen. Es ist denkbar, dass die Sicherungseinheit den Akkumulator in einem an dem Trägerelement angeordneten Zustand zumindest entlang einer weiteren Bewegungsrichtung, insbesondere in einer Richtung quer zu einer Längsachse des Trägerelements, sichert. Durch die erfindungsgemäße Ausgestaltung der Sicherungseinheit der Haltevorrichtung kann eine bedienerfreundliche einseitige lösbare, insbesondere axiale Fixierung des Akkumulators in der Haltevorrichtung realisiert werden. Insbesondere kann das Sicherungselement die gesamte Sicherungseinheit ausbilden. Insbesondere kann das Sicherungselement als Rastelement, Führungselement, Klemmelement oder Formschlusselement ausgebildet sein. Bevorzugt ist das Sicherungselement dazu vorgesehen, mit am Akkumulator angebrachten korrespondierenden Sicherungselementen zusammenzuwirken. Vorteilhaft kann das Sicherungselement eine sich, bei einer Betrachtung entlang der Längsachse des Trägerelements, zu Endbereichen des Sicherungselements hin verjüngende Form aufweisen. Es ist denkbar, dass das Sicherungselement beispielsweise eine im Wesentlichen quaderförmige, insbesondere kubische, Form aufweist. Darunter, dass das Sicherungselement eine Form aufweist, welche "im Wesentlichen" quaderförmig, insbesondere kubisch, ist, soll in diesem Zusammenhang insbesondere verstanden werden, dass ein größtmöglicher gedachter Quader, insbesondere Kubus, welcher gerade noch in ein von dem Sicherungselement eingenommenes Raumvolumen passt, das Raumvolumen zu mindestens 70 %, vorteilhaft zu mindestens 80 % und besonders vorteilhaft zu mindestens 90 % ausfüllt. Es ist auch denkbar, dass das Sicherungselement als ein Hinterschnitt, insbesondere schwalbenschwanz-, T- oder Doppel-T-förmig, ausgebildet ist. Beispielsweise könnten das Sicherungselement und/oder das Trägerelement durch ein Stanzverfahren und/oder ein Prägeverfahren und/oder ein Laserverfahren und/oder ein Wasserstrahlverfahren und/oder ein Schmiedeverfahren und/oder ein Spritzgussverfahren und/oder ein Gießverfahren und/oder ein Spanungsverfahren hergestellt sein. Insbesondere sind die Befestigungselemente der Haltevorrichtung zu einer Befestigung des Sicherungselements vorgesehen. Vorstellbar wäre, dass das Sicherungselement separat zu dem Trägerelement ausgebildet und insbesondere lösbar mit dem Trägerelement verbunden ist. Beispielsweise könnte das Sicherungselement an dem Trägerelement angeklebt und/oder angeschraubt und/oder angenietet sein. Um eine einfache und kostengünstige Herstellung der Haltevorrichtung zu erreichen, ist das Sicherungselement vorzugsweise einteilig mit dem Trägerelement ausgebildet. Insbesondere kann die Sicherungseinheit mehrere Sicherungselemente aufweisen. Vorzugsweise können die Sicherungselemente der Sicherungseinheit an unterschiedlichen Positionen, insbesondere in unterschiedlichen Abständen, an dem Trägerelement angeordnet sein.

Außerdem wird vorgeschlagen, dass die Haltevorrichtung eine elektrische Schnittstelleneinheit aufweist, die zu einer einseitigen elektrischen Kontaktierung des Akkumulators an der Trägereinheit angeordnet ist, insbesondere an der Verriegelungseinheit, besonders bevorzugt an einem Grundkörper der Verriegelungseinheit, angeordnet ist. Hierdurch kann vorteilhaft eine bedienerfreundliche Haltevorrichtung, insbesondere mit einem einfachen Aufbau, bereitgestellt werden. Besonders vorteilhaft wird ein hoher Montage- und Demontagekomfort durch die erfindungsgemäße Ausgestaltung erreicht. Bevorzugt ist die zumindest eine elektrische Schnittstelleneinheit zumindest teilweise einteilig mit der Verriegelungseinheit ausgebildet. Vorteilhaft kann eine platzsparende und bedienungsfreundliche Haltevorrichtung realisiert werden. Insbesondere ist die elektrische Schnittstelleneinheit an der Fixierseite der Verriegelungseinheit angeordnet.

Dadurch wird ermöglicht, dass der Akkumulator lediglich an einer Seite axial fixiert, elektrisch kontaktiert, verriegelt und entriegelt wird.

Des Weiteren wird vorgeschlagen, dass die Haltevorrichtung zumindest eine Variationseinheit aufweist, die dazu vorgesehen ist, die Verriegelungseinheit positionsvariabel an einem Trägerelement der Trägereinheit zu fixieren. Es kann vorteilhaft eine komfortable Bedienbarkeit erreicht werden. Besonders vorteilhaft kann durch die erfindungsgemäße Ausgestaltung der Haltevorrichtung eine Anpassung dieser an den zu haltenden Akkumulator stattfinden, insbesondere hinsichtlich einer Länge des Akkumulators. Vorzugsweise ist die Variationseinheit als eine Rasteinheit, eine Klemmeinheit oder eine Verschraubungseinheit ausgebildet. Es ist denkbar, dass in zumindest einer Ausgestaltung die Variationseinheit zumindest teilweise an der Verriegelungseinheit und/oder an der Trägereinheit angeordnet ist. Es ist denkbar, dass die Variationseinheit als Schienenschlitten ausgebildet ist. Insbesondere kann der Schienenschlitten entlang einer Längsachse des Trägerelements relativ zum Trägerelement verschoben werden und zumindest teilweise durch das Trägerelement geführt werden. Besonders bevorzugt weist der Schienenschlitten zumindest ein unter einer Federspannung stehendes Rastelement auf. Beispielsweise ist das Rastelement als Stift ausgebildet. Es ist auch denkbar, dass der Schienenschlitten ein Verschraubungselement oder ein Klemmelement aufweist. Insbesondere kann das Rastelement des Schienenschlittens in bestimmten Positionen des Schlittens auf dem Trägerelement in korrespondierende Rastausnehmungen des Trägerelements eingreifen. Insbesondere weist die Variationseinheit eine Betätigungseinheit auf, die dazu vorgesehen ist, den Schienenschlitten bei einer Betätigung der Betätigungseinheit aus einem verrasteten Zustand zu lösen. Es ist denkbar, dass die Variationseinheit die Verriegelungseinheit an den Sicherungselementen der Sicherungseinheit fixieren kann. Es ist auch denkbar, dass die Variationseinheit die Verriegelungseinheit an den Befestigungselementen der Haltevorrichtung fixieren kann. Hierdurch kann eine einfache Bauweise der Haltevorrichtung bereitgestellt werden.

Die Verriegelungseinheit weist zumindest eine Spanneinheit auf, welche dazu vorgesehen ist, den Akkumulator in einem an der Verriegelungseinheit angeordneten Zustand mit einer Spannkraft in Richtung der Verriegelungseinheit zu beaufschlagen. Vorteilhaft kann durch die Spannkraft ein Verrutschen oder eine Lockerung des Akkumulators auch bei starken Erschütterungen weitestgehend unterbunden werden. Besonders vorteilhaft kann durch die mittels der erfindungsgemäßen Spanneinheit auf den Akkumulator beaufschlagte Spannkraft eine sichere elektrische Kontaktierung bereitgestellt werden, insbesondere an der Seite des Akkumulators, an der der Akkumulator, insbesondere axial, an der Trägereinheit fixiert wird. Insbesondere findet die Beaufschlagung des Akkumulators mit einer Spannkraft durch die Spanneinheit an der Seite des Akkumulators statt, an der der Akkumulator auch axial fixiert und elektrisch kontaktiert wird. Insbesondere beträgt eine Druckkraft, welche die Spanneinheit auf den Akkumulator in einem an der Verriegelungseinheit angeordneten Zustand ausübt, zumindest ein Dreißigstel, vorzugsweise zumindest ein Zehntel, vorteilhaft zumindest ein Fünftel, bevorzugt zumindest ein Einfaches und besonders bevorzugt zumindest ein Zweifaches einer Gewichtskraft des Akkumulators. Die Spanneinheit weist vorzugsweise zumindest ein Spannelement auf, welches an dem ersten Verriegelungselement oder an dem zweiten Verriegelungselement angeordnet und insbesondere form- und/oder kraftschlüssig mit dem ersten Verriegelungselement oder mit dem zweiten Verriegelungselement verbunden ist. Insbesondere kann die Spanneinheit mehrere Spannelemente aufweisen. Vorteilhaft ist an dem ersten Verriegelungselement und an dem zweiten Verriegelungselement jeweils zumindest ein Spannelement der Spanneinheit angeordnet. An dem ersten Verriegelungselement ist ein erstes Spannelement und an dem zweiten Verriegelungselement ein zweites Spannelement angeordnet. Insbesondere können das erste Spannelement und das zweite Spannelement und/oder ein weiteres Spannelement der Spanneinheit zumindest teilweise unterschiedlich ausgebildet und/oder auf unterschiedliche Art und Weise an einem Verriegelungselement der Verriegelungseinheit angeordnet und/oder mit einem Verriegelungselement der Verriegelungseinheit verbunden sein. Insbesondere kann sich eine Spannkraft, mittels derer das erste Verriegelungselement durch das erste Spannelement der Spanneinheit vorgespannt ist, von zumindest einer weiteren Spannkraft, mittels derer das zweite Verriegelungselement durch das zweite Spannelement der Spanneinheit und/oder ein weiteres Verriegelungselement mittels einem weiteren Spannelement vorgespannt ist, insbesondere hinsichtlich eines Betrages und/oder hinsichtlich eines Kraftangriffspunktes und/oder hinsichtlich einer Richtung, in der die Spannkraft wirkt, unterscheiden. Unter einem "Spannelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von mindestens 1 mm, insbesondere von wenigstens 5 mm und vorzugsweise von mindestens 10 mm verstanden werden. Vorzugsweise ist eine durch ein Spannelement der Spanneinheit ausgeübte Spannkraft durch die bei einer elastischen Veränderung einer Erstreckung des Spannelements erzeugte abhängige Gegenkraft bedingt und insbesondere proportional zu dieser Gegenkraft. Bevorzugt ist das erste Spannelement, das zweite Spannelement und/oder ein weiteres Spannelement der Spanneinheit als eine Feder, insbesondere als eine Torsionsfeder und vorteilhaft als eine Schenkelund/oder Drehfeder ausgebildet und insbesondere aus einem Metall und/oder einer Metalllegierung, vorzugsweise aus einem Stahl und besonders bevorzugt aus einem Federstahl hergestellt. Alternativ ist denkbar, dass das zweite Spannelement und/oder ein weiteres Spannelement der Spanneinheit auch als ein von einer Feder verschiedenes elastisches Element ausgebildet ist und/oder beispielsweise aus einem Kunststoff und/oder einem Verbundwerkstoff hergestellt ist. Es ist auch denkbar, dass die Spanneinheit dazu vorgesehen ist, bei einer Aufhebung des Verriegelungszustands den Akkumulator mittels der Spannkraft auszuwerfen. Insbesondere kann dadurch vorteilhaft ein hoher Demontagekomfort erreicht werden.

Des Weiteren wird vorgeschlagen, dass die Verriegelungseinheit zumindest ein Dämpfungselement zu einer einseitigen spielfreien Fixierung des Akkumulators aufweist, insbesondere ist das Dämpfungselement an einer dem Akkumulator in einem an der Verriegelungseinheit angeordneten Zustand des Akkumulators zugewandten Seite der Verriegelungseinheit angeordnet. Vorteilhaft kann dadurch eine Schonung des Akkumulators auch bei starken Erschütterungen realisiert werden. Besonders vorteilhaft kann hierdurch ein fertigungs- und/oder anwendungsbedingter Bewegungsfreiraum des Akkumulators innerhalb der Haltevorrichtung gering gehalten werden, wodurch ein Verrutschen oder eine Lockerung des Akkumulators auch bei starken Erschütterungen weitestgehend unterbunden werden kann. Vorzugsweise ist zumindest ein Spannelement der Spanneinheit derart ausgebildet, dass es zusätzlich auch als ein Dämpfungselement fungiert. Alternativ oder zusätzlich ist denkbar, dass die Verriegelungseinheit ein oder mehrere Dämpfungselemente aufweist, welche von einem Spannelement der Spanneinheit verschieden und/oder separat ausgebildet sind. Insbesondere kann ein Dämpfungselement als eine Feder, insbesondere als eine Druckfeder, vorteilhaft als eine Torsionsfeder und vorzugsweise als eine Schenkel- und/oder Drehfeder ausgebildet sein. Zumindest ein Dämpfungselement könnte alternativ oder zusätzlich auch als eine pneumatische Feder, beispielsweise als eine Gasdruckfeder ausgebildet sein. Ferner könnte zumindest ein Dämpfungselement auch als ein Gummielement, insbesondere als ein Gummipuffer und/oder als ein Polsterelement und/oder als ein Schaumstoffelement, insbesondere als eine seitlich an der Verriegelungseinheit angeordnete Platte aus einem Schaumstoff, insbesondere aus einem Polyurethanschaumstoff und/oder als ein anderes insbesondere elastisches Element mit insbesondere dämpfenden und zu einer spielfreien Fixierung geeigneten Materialeigenschaften aus einem Kunststoff und/oder einem Verbundwerkstoff und/oder einem anderen geeigneten Werkstoff ausgebildet sein. Insbesondere ist das Dämpfungselement der Verriegelungseinheit an der Fixierseite der Verriegelungseinheit angeordnet, sodass eine einseitige lösbare, insbesondere axiale Fixierung des Akkumulators an der Trägereinheit ermöglicht werde kann.

Außerdem wird ein Fahrradrahmen, mit zumindest einer erfindungsgemäßen Haltevorrichtung vorgeschlagen. Vorzugsweise weist der Rahmen zumindest ein längliches Element auf, besonders vorteilhaft ist der Rahmen vollständig von länglichen Elementen gebildet. Unter einem "länglichen Element" soll in diesem Zusammenhang insbesondere ein Element verstanden werden, bei dem ein kleinstmöglicher gedachter Quader, welcher das Element gerade noch aufnehmen kann, eine Länge aufweist, welche mindestens das Fünffache, vorteilhaft mindestens das Zehnfache und besonders vorteilhaft mindestens das Fünfzehnfache einer Breite und einer Höhe des Quaders beträgt. Insbesondere kann der Rahmen zumindest eine Ausnehmung zu einer Aufnahme der Haltevorrichtung, insbesondere des Trägerelements, und des Energiespeichers aufweisen. Die Ausnehmung kann beispielsweise als eine Vertiefung oder ein Hohlraum des Rahmens ausgebildet sein. Durch eine zumindest teilweise Anordnung der Haltevorrichtung, insbesondere des Trägerelements, innerhalb eines Hohlraums des Rahmens kann insbesondere eine Optik des Rahmens in dem an dem Trägerelement angeordneten Zustand des Energiespeichers verbessert werden und/oder eine Wandstärke des Rahmens verringert werden und/oder ein Eindringen von Verschmutzungen und/oder Flüssigkeiten in den Energiespeicher verhindert werden. Besonders vorteilhaft ist die Anordnung der Haltevorrichtung und/oder des Trägerelements innerhalb des Hohlraums bei einer Ausgestaltung des Rahmens als ein Leichtbaurahmen, beispielsweise ein Carbonrahmen.

Zudem wird vorgeschlagen, dass der Rahmen zumindest ein Rahmenrohr, insbesondere ein Unterrohr, aufweist, in dem die Haltevorrichtung zumindest größtenteils angeordnet ist. Dadurch kann vorteilhaft eine besonders platzsparende Verstauung des Akkumulators erreicht werden. Zudem kann vorteilhaft eine Verstaumöglichkeit für besonders lange und damit eine hohe Energiespeicherkapazität aufweisende Energiespeicher geschaffen werden. Bevorzugt wird der Akkumulator entlang seiner Längsachse in das Rahmenelement eingeschoben. Insbesondere streckt sich das Trägerelement parallel zu dem Rahmenelement. Insbesondere wird bei einer Montage der Akkumulator zumindest teilweise entlang des Trägerelements geführt eingeschoben, bis der Akkumulator auf die an der Trägereinheit angeordnete Verriegelungseinheit trifft. Alternativ ist jedoch auch denkbar, dass der Akkumulator durch eine seitliche Öffnung des Rahmenelements in das Innere des Rahmenelements eingebracht wird.

Die erfindungsgemäße Haltevorrichtung und/oder der erfindungsgemäße Fahrradrahmen sollen/soll hierbei nicht auf die oben beschriebene Anwendung und Ausführungsform beschränkt sein. Insbesondere können/kann die erfindungsgemäße Haltevorrichtung und/oder der erfindungsgemäße Rahmen zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten. Die erfindungsgemäße Haltevorrichtung und/oder der erfindungsgemäße Fahrradrahmen sind/ist durch den beigefügten Ansprüchen beschränkt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Fahrrads mit einem erfindungsgemäßen Rahmen, insbesondere Fahrradrahmen, in einer Seitenansicht,
- Fig. 2a: eine schematische Darstellung einer ersten Variante des Fahrradrahmens mit einer erfindungsgemäßen Haltevorrichtung und mit einem Akkumulator in einer Seitenansicht,
- Fig. 2b: eine schematische Darstellung einer zweiten Variante des Fahrradrahmens mit der erfindungsgemäßen Haltevorrichtung und dem Akkumulator in einer Seitenansicht,
- Fig. 3: eine schematische Darstellung der erfindungsgemäßen Haltevorrichtung,
- Fig. 4: eine schematische Darstellung eines Teils einer Verriegelungseinheit der erfindungsgemäßen Haltevorrichtung,
- Fig. 5: eine weitere schematische Darstellung eines Teils der Verriegelungseinheit und
- Fig. 6: eine schematische Darstellung einer Befestigungseinheit am Akkumulator mit einer Energiespeichereinheit.

### Beschreibung des Ausführungsbeispiels

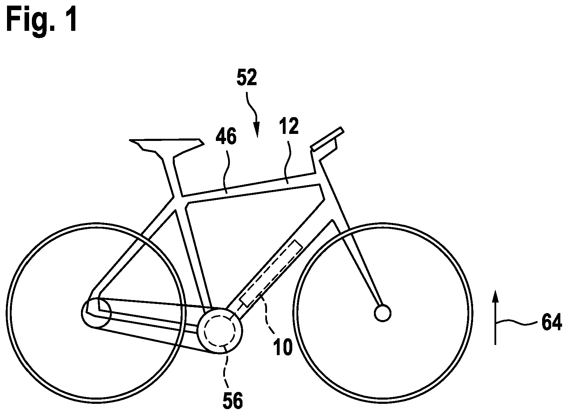

Fig. 1 zeigt ein Fahrrad 52 mit einem Hilfsmotor 56 und mit einem Akkumulator 10. Das Fahrrad 52 ist als ein Pedelec oder als ein E-Bike ausgebildet. Der Ackumulator 10 ist dazu vorgesehen, den Hilfsmotor 56 mit elektrischer Energie zu versorgen. Das Fahrrad 52 weist eine als Fahrradrahmen 46 ausgebildete Rahmeneinheit 12 auf.

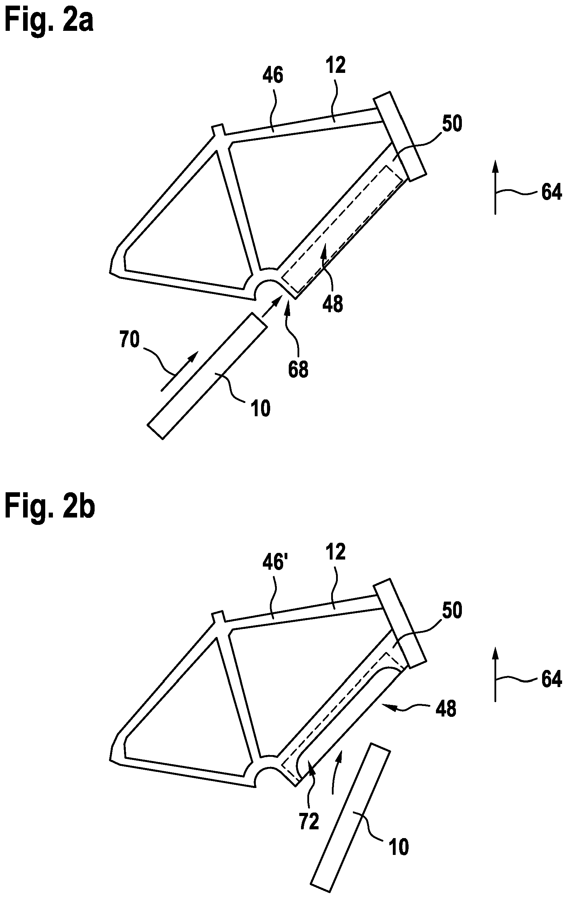

Die Figuren 2a und 2b zeigen zwei Varianten des Fahrradrahmens 46, 46'. Der Fahrradrahmen 46 weist ein Rahmenelement 50 auf. Das Rahmenelement 50 ist rohrförmig ausgebildet. Das rohrförmig ausgebildete Rahmenelement 50 weist einen runden Querschnitt auf, könnte jedoch alternativ auch einen ovalen, einen eckigen oder einen andersartig geformten Querschnitt aufweisen. Das Rahmenelement 50 ist als ein Unterrohr des Fahrradrahmens 46, 46' ausgebildet. Der Fahrradrahmen 46, 46' weist eine Haltevorrichtung 48 auf. Das Rahmenelement 50 ist dazu vorgesehen, zumindest einen Großteil der Haltevorrichtung 48 in seinem Inneren aufzunehmen. Das Rahmenelement 50 ist dazu vorgesehen, zumindest einen Großteil des mittels der Haltevorrichtung 48 gehalterten Akkumulators 10 in seinem Inneren aufzunehmen. In dem Ausführungsbeispiel der Fig. 2a weist der Fahrradrahmen 46 an einer Unterseite des Rahmenelements 50 eine Öffnung 68 auf. Der Akkumulator 10 wird durch die Öffnung 68 entlang einer Längsachse 70 des Akkumulators 10 in das Innere des Rahmenelements 50 eingeschoben. In dem alternativen Ausführungsbeispiel der Fig. 2b weist der Fahrradrahmen 46' an dem Rahmenelement 50 eine seitliche Öffnung 72 auf. Der Akkumulator 10 wird durch die seitliche Öffnung 72 in das Innere des Rahmenelements 50 eingebracht, insbesondere eingeschwenkt. Die seitliche Öffnung 72 weist in einer Aufstellrichtung 64 des Fahrrads 52 gesehen im Wesentlichen nach unten.

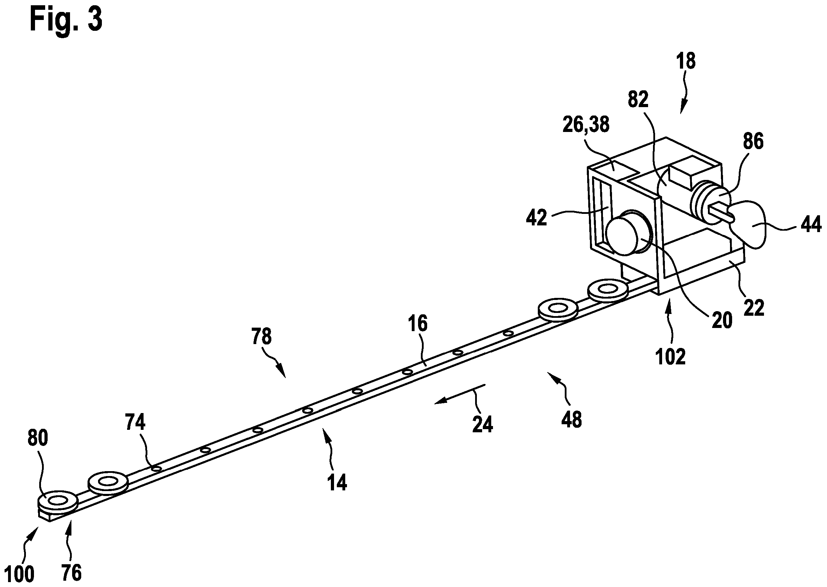

Die Figur 3 zeigt eine schematische Darstellung der Haltevorrichtung 48. Die Haltevorrichtung 48 ist zu einer lösbaren Halterung des Akkumulators 10 an dem Fahrradrahmen 46 vorgesehen. Die Haltevorrichtung 48 weist eine Trägereinheit 14 auf. Die Trägereinheit 14 weist ein Trägerelement 16 auf. Das Trägerelement 16 ist als eine Führungsschiene ausgebildet. Das Trägerelement 16 weist eine Längsachse 24 auf. Der Akkumulator 10 wird von dem als Führungsschiene ausgebildeten Trägerelement 16 entlang der Längsachse 24 geführt. Das Trägerelement 16 weist einen Aufnahmebereich 78 für den Akkumulator 10 auf. Der Akkumulator 10 ist zumindest in einem montierten Betriebszustand der Haltevorrichtung 48 in dem Aufnahmebereich 78 des Trägerelements 16 angeordnet, insbesondere fixiert. Das Trägerelement 16 weist Befestigungselemente 74 auf. Die Befestigungselemente 74 sind als Ausnehmungen ausgebildet. Das Trägerelement 16 ist mittels der Befestigungselemente 74 und beispielsweise Schrauben, Nieten oder dergleichen an den Fahrradrahmen 46 fixierbar.

Die Haltevorrichtung 48 umfasst eine Sicherungseinheit 76 auf, die zumindest ein Sicherungselement 80, insbesondere mehrere Sicherungselemente 80, aufweist. Die Sicherungselemente 80 der Sicherungseinheit 76 sind am Trägerelement 16 angeordnet, insbesondere an den Ausnehmungen der Befestigungselemente 74 des Trägerelements 16. Die Sicherungselemente 80 sind entlang der Längsachse 24 des Trägerelements 16 verteilt angeordnet. Die Sicherungselemente 80 sind identisch zueinander ausgebildet, weshalb im Folgenden lediglich eines der Sicherungselemente 80 beschrieben wird. Das Sicherungselement 80 ist einteilig mit dem Trägerelement 16 ausgebildet. Das Sicherungselement 80 sichert den Akkumulator 10 in einem an dem Trägerelement 16 angeordneten Zustand des Akkumulators 10 entlang einer quer zu der Längsachse 24 des Trägerelements 16 verlaufenden Richtung am Trägerelement 16. Das Sicherungselement 80 weist eine sich, bei einer Betrachtung entlang der Längsachse 24 des Trägerelements 16, verjüngende Form auf. Das Sicherungselement 80 weist eine, bei einer Betrachtung senkrecht auf eine Haupterstreckungsebene (nicht dargestellt) des Sicherungselements 80, kreisförmige Form auf. Insbesondere kann das Sicherungselement 80 ein Gleitelement (nicht dargestellt) zu einer Reduzierung von Reibung während eines Führens des Akkumulators 10 bei einem Anordnen des Akkumulators 10 an dem Trägerelement 16 aufweisen.

Die Haltevorrichtung 48 weist eine Verriegelungseinheit 18 auf. Die Verriegelungseinheit 18 ist an der Trägereinheit 14, insbesondere an dem Trägerelement 16, angeordnet, insbesondere daran fixiert. Die Verriegelungseinheit 18 ist an einem Ende 100 des Trägerelements 16 der Trägereinheit 14 angeordnet. Ein weiteres Ende 102 des Trägerelements 16 ist frei von einem Verriegelungselement, einem Querführungselement und/oder einem Anschlagelement ausgebildet. Die Haltevorrichtung 48 weist eine elektrische Schnittstelleneinheit 20 auf. Die elektrische Schnittstelleneinheit 20 dient zu einer elektrischen Kontaktierung des in den Aufnahmebereich 78 eingebrachten Akkumulators 10. Die elektrische Schnittstelleneinheit 20 ist auf einer dem Aufnahmebereich 78 zugewandten Seite 42 der Verriegelungseinheit 18 angeordnet. Die elektrische Schnittstelleneinheit 20 ist teilweise einteilig mit der Verriegelungseinheit 18 ausgebildet. Die Haltevorrichtung 48 weist eine Variationseinheit 22 auf. Die Variationseinheit 22 ist dazu vorgesehen, die Verriegelungseinheit 18 positionsvariabel an dem Trägerelement 16 zu fixieren, insbesondere an den Sicherungselementen 80. Die Verriegelungseinheit 18 weist eine Spanneinheit 82 auf, welche dazu vorgesehen ist, den Akkumulator 10 in einem an der Verriegelungseinheit 18 angeordneten Zustand mit einer Spannkraft in Richtung der Verriegelungseinheit 18 zu beaufschlagen. Die Verriegelungseinheit 18 weist ein Dämpfungselement 84 zu einer spielfreien Fixierung des Akkumulators 10 auf. Das Dämpfungselement 84 ist an der dem Akkumulator 10 in einem an der Verrieglungseinheit 18 angeordneten Zustand des Akkumulators 10 zugewandten Seite 42 der Verriegelungseinheit 18 angeordnet.

Die Verriegelungseinheit 18 weist eine Betätigungseinheit 26 mit einem Betätigungselement 38 auf, welche zu einer werkzeuglosen Betätigung der Verriegelungseinheit 18 durch einen Benutzer vorgesehen ist. Die Verriegelungseinheit 18 weist ein Schloss 86 auf. Das Schloss 86 ist dazu vorgesehen, eine unautorisierte Betätigung der Betätigungseinheit 26 der Verriegelungseinheit 18 zu verhindern. In einem versperrten Zustand des Schlosses 86 blockiert das Schloss 86 eine Betätigung des Betätigungselements 38. Mit Hilfe eines Schlüssels 44 kann das Schloss 86 entsperrt und/oder versperrt werden.

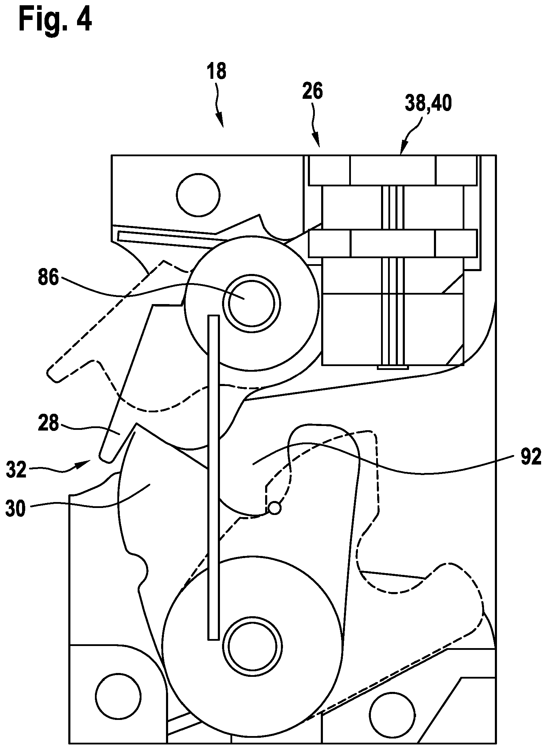

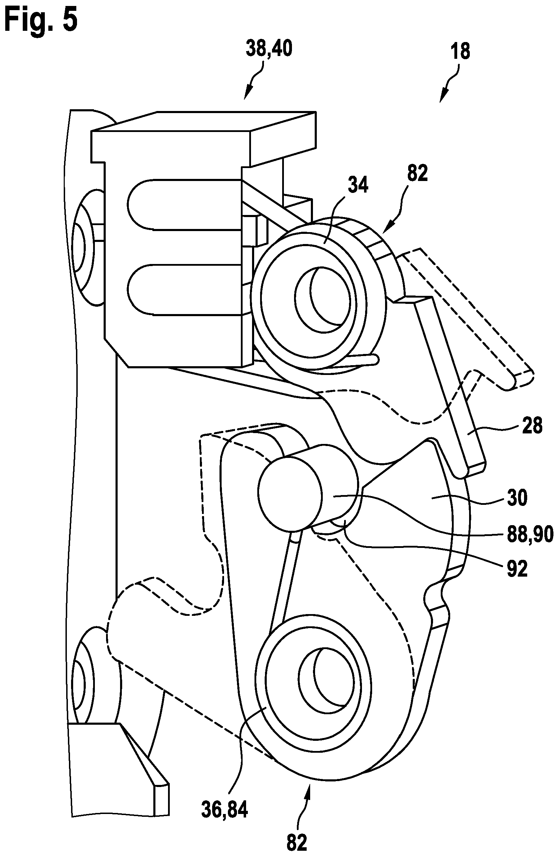

Die Figuren 4 und 5 zeigen einen Teil der Verriegelungseinheit 18 der Haltevorrichtung 48 in zwei verschiedenen schematischen Ansichten. Die Verriegelungseinheit 18 ist zu einer axialen Fixierung und lösbaren Verriegelung vorgesehen. Die Verriegelungseinheit 18 weist ein erstes Verriegelungselement 28 und ein zweites Verriegelungselement 30 auf. Das zweite Verriegelungselement 30 korrespondiert mit dem ersten Verriegelungselement 28. Die Verriegelungselemente 28, 30 sind drehbeweglich an der Verriegelungseinheit 18 gelagert. Die Verriegelungselemente 28, 30 sind in den Figuren 4 und 5 jeweils in zwei verschiedenen Positionen dargestellt. In einer ersten Position sind die Verriegelungselemente 28, 30 mit einer Strichlinie dargestellt und zeigen einen geöffneten Zustand der Verriegelungseinheit 18. In einer zweiten Position sind die Verriegelungselemente 28, 30 mit einer Volllinie dargestellt und zeigen die Verriegelungseinheit 18 in einem Verriegelungszustand 32. In dem Verriegelungszustand 32 blockiert das erste Verriegelungselement 28 eine Drehbewegung des zweiten Verriegelungselements 30. In einem Verriegelungszustand 32 wird der Akkumulator 10 über ein am Akkumulator 10 angeordnetes Verriegelungselement 88, welches vorliegend als Bolzen 90 ausgebildet ist, einseitig fixiert und verriegelt. Das Verriegelungselement 88 des Akkumulators 10 befindet sich in einem Verriegelungszustand 32 in einer Aufnahme 92 der Verriegelungseinheit 18. Die Verriegelungseinheit 18 weist die Spanneinheit 82 auf, welche dazu vorgesehen ist, die Verriegelungselemente 28, 30 in dem Verriegelungszustand 32 mittels einer Spannkraft vorzuspannen. Die Spanneinheit 82 weist dazu ein erstes Spannelement 34 und ein zweites Spannelement 36 auf. Das erste Spannelement 34 ist als eine Drehfeder ausgebildet und mit dem ersten Verriegelungselement 28 fest verbunden. In dem Verriegelungszustand 32 spannt das erste Spannelement 34 das erste Verriegelungselement 28 mittels einer Spannkraft vor. Das zweite Spannelement 36 als eine weitere Drehfeder ausgebildet und mit dem zweiten Verriegelungselement 30 fest verbunden. In dem Verriegelungszustand 32 spannt das zweite Spannelement 36 das zweite Verriegelungselement 30 mittels einer Spannkraft vor. Die Verriegelungseinheit 18 weist die Betätigungseinheit 26 zu einer werkzeuglosen Betätigung der Verriegelungseinheit 18 durch einen Benutzer auf. Die Betätigungseinheit 26 weist das Betätigungselement 38 auf. Das Betätigungselement 38 ist als Taste 40 ausgebildet. Durch eine Betätigung der Taste 40 wird das erste Verriegelungselement 28 aus dem Verriegelungszustand 32 bewegt, wodurch das unter einer Spannkraft stehende zweite Verriegelungselement 30 in eine geöffnete Position bewegt wird. Durch die Bewegung des zweiten Verriegelungselements 30, welche durch eine Betätigung der Verriegelungseinheit 18, insbesondere durch die Betätigung der Taste 40 ausgelöst wird, wird der Akkumulator 10 ausgeworfen. Die Verriegelungseinheit 18 weist das Schloss 86 auf. Das Schloss 86 ist mit dem ersten Verriegelungselement 28 formschlüssig verbunden. Das Schloss 86 bildet einen Sicherungsmechanismus der Betätigungseinheit 26 zu einem Schutz vor einer unautorisierten Betätigung der Verriegelungseinheit 18. In einem versperrten Zustand des Schlosses 86 blockiert das Schloss 86 eine Betätigung des Betätigungselements 38. Mit Hilfe eines Schlüssels 44 kann das Schloss 86 entsperrt und/oder versperrt werden. Mit Hilfe des Schlüssels 44 kann insbesondere die Verriegelungseinheit 18 ansonsten werkzeuglos betätigt werden. Die Verriegelungseinheit 18 weist ein Dämpfungselement 84. Vorliegend ist das zweite Spannelement 36 gleichzeitig als Dämpfungselement 84 ausgebildet. In dem Verriegelungszustand 32 übt das als Dämpfungselement 84 ausgebildete zweite Spannelement 36 eine Vorspannung aus und ist zu einer spielfreien Fixierung des Akkumulators 10 vorgesehen. Alternativ oder zusätzlich könnte das Dämpfungselement 84 auch als eine von dem als Drehfeder ausgebildeten zweiten Spannelement 36 verschieden ausgebildete weitere Feder oder als ein Gummielement, als ein Polsterelement oder als eine Platte aus einem Schaumstoff wie beispielsweise Polyurethan, oder einem weiteren zu einer Dämpfung und spielfreien Fixierung des Akkumulators 10 geeigneten Bauelement ausgeführt sein.

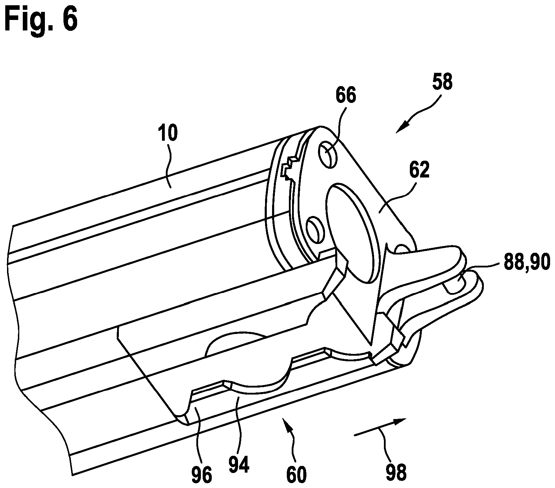

Die Figur 6 zeigt eine schematische Darstellung einer am Akkumulator 10 angeordneten Befestigungseinheit 58, die eine Sicherungseinheit 60 aufweist. Die Sicherungseinheit 60 weist ein Sicherungsschienenelement 62 auf. Das Sicherungsschienenelement 62 weist vier Schraublöcher 66 auf. Die Schraublöcher 66 dienen einem Anschrauben des Sicherungsschienenelements 62 an ein Ende des Akkumulators 10. Das Sicherungsschienenelement 62 weist drei Aufnahmebereiche 94 für das Sicherungselement 80 auf, welche funktionstechnisch identisch zueinander ausgebildet sind. Das Sicherungsschienenelement 62 weist zwei Sicherungsbereiche 96 für das Sicherungselement 80 auf. Die Sicherungsbereiche 96 sind entlang einer Längsachse 98 des Sicherungsschienenelements 62 zu dem Aufnahmebereich 94 benachbart angeordnet. Die Sicherungsbereiche 96 sind identisch zueinander ausgebildet. Der Sicherungsbereich 96 definiert eine Aufnahme für das Sicherungselement 80. Das Sicherungsschienenelement weist das Verriegelungselement 88 auf, welches vorliegend als Bolzen 90 ausgebildet ist.

## Patentansprüche

1. Haltevorrichtung (48) zur lösbaren Halterung eines Akkumulators (10), insbesondere eines Fahrradakkumulators, an einem Fahrradrahmen (46, 46'), mit zumindest einer Trägereinheit (14) zu einer zumindest teilweisen Aufnahme und/oder Führung des Akkumulators (10), und mit zumindest einer, insbesondere zumindest größtenteils innerhalb des Rahmens, an der Trägereinheit (14) angeordneten Verriegelungseinheit (18) zur einseitigen lösbaren, insbesondere axialen, Fixierung des Akkumulators (10) an der Trägereinheit (14), wobei die Verriegelungseinheit (18) ein erstes Verriegelungselement (28) und ein mit dem ersten Verriegelungselement (28) korrespondierendes zweites Verriegelungselement (30) aufweist, die an einem Grundkörper der Verriegelungseinheit (18) beweglich, insbesondere drehbeweglich, gelagert sind, und wobei die Verriegelungseinheit (18) zumindest eine Spanneinheit (82) aufweist, **dadurch gekennzeichnet, dass** die Spanneinheit dazu vorgesehen ist, den Akkumulator (10) in einem an der Verriegelungseinheit (18) angeordneten Zustand mit einer Spannkraft in Richtung der Verriegelungseinheit (18) zu beaufschlagen, wobei an dem ersten Verriegelungselement (28) ein erstes Spannelement (34) der Spanneinheit (82) und an dem zweiten Verriegelungselement (30) ein zweites Spannelement (36) der Spanneinheit (82) angeordnet ist, wobei das erste Verriegelungselement (28) in einem Verriegelungszustand eine Bewegung, insbesondere eine Drehbewegung, des zweiten Verriegelungselements (30) blockiert.

2. Haltevorrichtung (48) nach Anspruch 1, **dadurch gekennzeichnet, dass** die Verriegelungseinheit (18) an zumindest einem Ende (102) zumindest eines Trägerelements (16) der Trägereinheit (14) angeordnet ist, wobei ein weiteres Ende (100) des Trägerelements (16), das der Verriegelungseinheit (18) abgewandt ist, frei von einem Verriegelungselement, einem Axialsicherungselement und/oder einem Anschlagelement ausgebildet ist.

3. Haltevorrichtung (48) nach Anspruch 1 oder 2, **gekennzeichnet durch** zumindest eine Sicherungseinheit (76), die zumindest ein Sicherungselement (80), das an einem der Verriegelungseinheit (18) abgewandten, insbesondere weiteren, Ende (100) des Trägerelements (16) der Trägereinheit (14) angeordnet ist und den Ackumulator (10) in einem an dem Trägerelement (16) angeordneten Zustand des Akkumulators (10) zumindest entlang einer quer zu einer Längsachse (24) des Trägerelements (16) verlaufenden Richtung am Trägerelement (16) sichert.

4. Haltevorrichtung (48) nach einem der vorhergehenden Ansprüche, **gekennzeichnet durch** zumindest eine elektrische Schnittstelleneinheit (20), die zu einer einseitigen elektrischen Kontaktierung des Akkumulators (10) an der Trägereinheit (14) angeordnet ist, insbesondere an der Verriegelungseinheit (18) angeordnet ist.

5. Haltevorrichtung (48) nach einem der vorhergehenden Ansprüche, **gekennzeichnet durch** zumindest eine elektrische Schnittstelleneinheit (20), die zumindest teilweise einteilig mit der Verriegelungseinheit (18) ausgebildet ist.

6. Haltevorrichtung (48) nach einem der vorhergehenden Ansprüche, **gekennzeichnet durch** zumindest eine Variationseinheit (22), die dazu vorgesehen ist, die Verriegelungseinheit (18) positionsvariabel an einem Trägerelement (16) der Trägereinheit (14) zu fixieren.

7. Haltevorrichtung (48) nach einem der vorhergehenden Ansprüche, **dadurch gekennzeichnet, dass** die Verriegelungseinheit (18) zumindest ein Dämpfungselement (104) zu einer einseitigen spielfreien Fixierung des Akkumulators (10) aufweist.

8. Fahrradrahmen (46, 46'), mit zumindest einer Haltevorrichtung (48) nach einem der vorhergehenden Ansprüche.

9. Rahmen nach Anspruch 8, mit zumindest einem Rahmenrohr, in dem die Haltevorrichtung (48) zumindest größtenteils angeordnet ist.

## Claims

1. Holding device (48) for detachably holding a battery (10), in particular a bicycle battery, on a bicycle frame (46, 46'), having at least one carrier unit (14) for at least partially receiving and/or guiding the battery (10), and having at least one locking unit (18), arranged on the carrier unit (14), in particular at least for the most part within the frame, for one-sided detachable, in particular axial, fixing of the battery (10) to the carrier unit (14), wherein the locking unit (18) has a first locking element (28) and a second locking element (30) which corresponds to the first locking element (28), which are mounted in a movable, in particular rotatable, manner on a main body of the locking unit (18), and wherein the locking unit (18) has at least one bracing unit (82), **characterized in that** the bracing unit is intended to subject the battery (10), in a state arranged on the locking unit (18), to a bracing force in the direction of the locking unit (18), wherein a first bracing element (34) of the bracing unit (82) is arranged on the first locking element (28) and a second bracing element (36) of the bracing unit (82) is arranged on the second locking element (30), wherein the first locking element (28), in a locking state, blocks a movement, in particular a rotation, of the second locking element (30).

2. Holding device (48) according to Claim 1, **characterized in that** the locking unit (18) is arranged on at least one end (102) of at least one carrier element (16) of the carrier unit (14), wherein a further end (100) of the carrier element (16), which is directed away from the locking unit (18), is configured to be free of a locking element, an axial securing element and/or a stop element.

3. Holding device (48) according to Claim 1 or 2, **characterized by** at least one securing unit (76), having at least one securing element (80) which is arranged on an, in particular further, end (100) of the carrier element (16) of the carrier unit (14) that is directed away from the locking unit (18), and which secures the battery (10), in a state of the battery (10) in which it is arranged on the carrier element (16), to the carrier element (16) at least along a direction that is transverse to a longitudinal axis (24) of the carrier element (16).

4. Holding device (48) according to one of the preceding claims, **characterized by** at least one electrical interface unit (20), which is arranged on the carrier unit (14), in particular is arranged on the locking unit (18), for one-sided electrical contacting of the battery (10).

5. Holding device (48) according to one of the preceding claims, **characterized by** at least one electrical interface unit (20), which is formed at least partially integrally with the locking unit (18).

6. Holding device (48) according to one of the preceding claims, **characterized by** at least one variation unit (22), which is intended to fix the locking unit (18) to a carrier element (16) of the carrier unit (14) in a positionally variable manner.

7. Holding device (48) according to one of the preceding claims, **characterized in that** the locking unit (18) has at least one damping element (104) for one-sided fixing of the battery (10) without play.

8. Bicycle frame (46, 46') having at least one holding device (48) according to one of the preceding claims.

9. Frame according to Claim 8, having at least one frame tube in which the holding device (48) is arranged at least for the most part.

## Revendications

1. Dispositif de maintien (48) pour le maintien amovible d'un accumulateur (10), notamment d'un accumulateur de bicyclette, sur un cadre de bicyclette (46, 46'), avec au moins une unité de support (14) pour un logement et/ou un guidage au moins partiel de l'accumulateur (10), et avec au moins une unité de verrouillage (18) agencée sur l'unité de support (14), notamment au moins en grande partie à l'intérieur du cadre, pour la fixation amovible d'un côté, notamment axiale, de l'accumulateur (10) sur l'unité de support (14), l'unité de verrouillage (18) présentant un premier élément de verrouillage (28) et un deuxième élément de verrouillage (30) correspondant au premier élément de verrouillage (28), qui sont montés de manière mobile, notamment de manière mobile en rotation, sur un corps de base de l'unité de verrouillage (18), et l'unité de verrouillage (18) présentant au moins une unité de serrage (82), **caractérisé en ce que** l'unité de serrage est prévue pour solliciter l'accumulateur (10) dans un état agencé sur l'unité de verrouillage (18) avec une force de serrage en direction de l'unité de verrouillage (18), un premier élément de serrage (34) de l'unité de serrage (82) étant agencé sur le premier élément de verrouillage (28) et un deuxième élément de serrage (36) de l'unité de serrage (82) étant agencé sur le deuxième élément de verrouillage (30), le premier élément de verrouillage (28) bloquant dans un état de verrouillage un mouvement, notamment un mouvement de rotation, du deuxième élément de verrouillage (30).

2. Dispositif de maintien (48) selon la revendication 1, **caractérisé en ce que** l'unité de verrouillage (18) est agencée à au moins une extrémité (102) d'au moins un élément de support (16) de l'unité de support (14), une autre extrémité (100) de l'élément de support (16), qui est détournée de l'unité de verrouillage (18), étant réalisée sans élément de verrouillage, élément de sécurisation axiale et/ou élément de butée.

3. Dispositif de maintien (48) selon la revendication 1 ou 2, **caractérisé par** au moins une unité de sécurisation (76) qui comprend au moins un élément de sécurisation (80) qui est agencé à une extrémité (100) de l'élément de support (16) de l'unité de support (14) détournée de l'unité de verrouillage (18), notamment une autre extrémité, et qui sécurise l'accumulateur (10) sur l'élément de support (16) dans un état de l'accumulateur (10) agencé sur l'élément de support (16) au moins le long d'une direction s'étendant transversalement à un axe longitudinal (24) de l'élément de support (16).

4. Dispositif de maintien (48) selon l'une quelconque des revendications précédentes, **caractérisé par** au moins une unité d'interface électrique (20) qui est agencée sur l'unité de support (14) pour une mise en contact électrique unilatérale de l'accumulateur (10), notamment qui est agencée sur l'unité de verrouillage (18).

5. Dispositif de maintien (48) selon l'une quelconque des revendications précédentes, **caractérisé par** au moins une unité d'interface électrique (20) qui est au moins partiellement réalisée d'un seul tenant avec l'unité de verrouillage (18).

6. Dispositif de maintien (48) selon l'une quelconque des revendications précédentes, **caractérisé par** au moins une unité de variation (22) prévue pour fixer l'unité de verrouillage (18) en position variable sur un élément de support (16) de l'unité de support (14).

7. Dispositif de maintien (48) selon l'une quelconque des revendications précédentes, **caractérisé en ce que** l'unité de verrouillage (18) présente au moins un élément d'amortissement (104) pour une fixation unilatérale sans jeu de l'accumulateur (10).

8. Cadre de bicyclette (46, 46'), avec au moins un dispositif de maintien (48) selon l'une quelconque des revendications précédentes.

9. Cadre selon la revendication 8, avec au moins un tube de cadre dans lequel le dispositif de maintien (48) est agencé au moins en grande partie.
